# FASCICULE DE BREVET EUROPEEN

(11) **EP 1 692 882 B1**
(45) Date de publication et mention de la délivrance du brevet: **29.10.2008**
(21) Numéro de dépôt: 04805519.8
(22) Date de dépôt: 23.11.2004
(51) Int. Cl.: H04Q 3/00, H04L 12/24, H04Q 7/24

(54) **PROCEDE ET SERVEUR DE COORDINATION DE SERVICES DE TELECOMMUNICATION**
VERFAHREN UND SERVER ZUR KOORDINATION VON TELEKOMMUNIKATIONSDIENSTEN
METHOD AND SERVER FOR CO-ORDINATION OF TELECOMMUNICATION SERVICES

(30) Priorité: 11.12.2003 FR 0314524
(43) Date de publication de la demande: 23.08.2006
(73) Titulaire: France Telecom S.A., 75015 Paris (FR)
(72) Inventeur: KERDRAON, Alan, 14000 Caen (FR); BURY, Emmanuel, 14600 GONNEVILLE SUR HONFLEUR (FR); REBILLON, Jacques, Olivier, 14220 MUTRECY (FR)
(74) Mandataire: Joly, Jean-Jacques
(86) Numéro de dépôt international: PCT/FR2004/002990
(87) Numéro de publication internationale: WO 2005/067322

(56) Documents cités:
- FR-A- 2 814 021
- FR-A- 2 834 164
- US-A1- 2002 196 741
- US-B1- 6 625 141

## Description

La présente invention concerne un procédé et un serveur de coordination de services de télécommunication.

Elle s'applique notamment, mais non exclusivement aux services de télécommunication accessibles à l'aide d'un terminal informatique ou téléphonique connecté à un réseau de télécommunication, tel qu'un réseau téléphonique ou un réseau informatique par exemple du type réseau Internet.

A titre d'exemples de services rendus par un réseau de télécommunication, on peut citer un service de répertoire téléphonique intelligent, indiquant les contacts accessibles, un service de renvoi automatique d'un appel, un service de rappel automatique d'un correspondant, un service de messagerie, ou encore un service de notification d'événements particuliers, comme la publication d'informations particulières dans le réseau Internet.

Or les utilisateurs de tels services disposent de plus en plus fréquemment de plusieurs terminaux (téléphone fixe personnel et au bureau, téléphone mobile, ordinateur connecté au réseau Internet, ...). Il est donc apparu le besoin de rendre ces services indépendamment des terminaux à la disposition des utilisateurs, ce qui pose des problèmes d'accès aux services et de cohérence lorsqu'un même utilisateur utilise différents terminaux pour accéder à un même service, et de gestion de droits d'accès et de facturation, lorsque l'utilisateur accède à un service par l'intermédiaire d'un autre service ou à partir de différents terminaux.

La demande de brevet FR 2 814 021 déposée par la Demanderesse décrit un serveur de coordination de services permettant de coordonner différents services de télécommunication, qui peuvent être rendus simultanément par des opérateurs différents. Ce serveur est conçu pour recevoir et traiter des requêtes émises par les services pour identifier et/ou authentifier un utilisateur, lorsque celui-ci accède au service, pour localiser un utilisateur recherché par un service, pour obtenir des informations de personnalisation ou d'autorisation relatives à un utilisateur, ou encore pour valoriser des services facturés à la durée, au volume ou à l'acte.

Toutefois, pour qu'un utilisateur puisse bénéficier de tels services de télécommunication, il est nécessaire qu'il soit accessible par un réseau de télécommunication. Or le serveur de coordination de services décrit dans la demande de brevet précitée ne prévoit aucune disposition pour déterminer l'état d'accessibilité des utilisateurs. En outre, cette notion d'accessibilité est à distinguer de la notion de disponibilité. En effet, un utilisateur peut être accessible, c'est-à-dire disposer d'un terminal accessible par un réseau de télécommunication, mais souhaiter ne pas être dérangé pendant une certaine période. Ce serveur de coordination de services ne permet pas non plus de gérer la disponibilité des utilisateurs.

La présente invention a pour but de supprimer ces inconvénients en proposant un composant réutilisable robuste et tolérant aux pannes, qui est intégrable à moindre coût lors de la réalisation de nouveaux services. Cet objectif est atteint par la prévision d'un procédé de coordination de services de télécommunication rendus à une pluralité d'utilisateurs, par l'intermédiaire de terminaux de télécommunication connectés à différents réseaux de télécommunication, le procédé comprenant des étapes au cours desquelles un serveur de médiation de services coordonne les traitements effectués par différents services de télécommunication pour le compte de chacun des utilisateurs.

Selon l'invention, ce procédé comprend en outre des étapes au cours desquelles :
- les services de télécommunication se connectent au serveur de médiation de services et spécifient des événements qui doivent leur être notifiés par le serveur de médiation de services, et/ou des événements qu'ils sont susceptibles d'émettre vers le serveur de médiation de services,
- les terminaux de télécommunication des utilisateurs se connectent au serveur de médiation de services, transmettent au serveur de médiation de services des profils d'utilisateur spécifiant des modes de disponibilité, qui sont mémorisés dans une base de données, activent des profils et des modes de disponibilité préalablement spécifiés, et accèdent aux services connectés,
- le serveur de médiation de services détermine un état de joignabilité de chaque utilisateur en fonction de l'existence d'au moins un terminal de l'utilisateur connecté au serveur, et du profil et du mode de disponibilité actifs de l'utilisateur,
- le serveur de médiation de services transmet à chaque terminal connecté l'état de joignabilité d'utilisateurs spécifiés dans une liste de contacts faisant partie du profil actif de l'utilisateur du terminal,
- le serveur de médiation de services transmet, pour chaque événement reçu d'un service, une notification d'événement aux services connectés ayant spécifié que l'événement doit leur être notifié.

Selon un mode de réalisation préféré de l'invention, chaque mode de disponibilité spécifié par un utilisateur comprend :
- un état de disponibilité pouvant prendre les valeurs disponible, non disponible, en transfert d'appel vers un numéro d'appel spécifié, ou inconnu si l'utilisateur ne souhaite pas rendre accessible son état de disponibilité,
- un éventuel identifiant de terminal vers lequel transférer un appel entrant destiné à l'utilisateur,
- un mode de notification d'événements, et
- une liste de contacts auxquels s'applique l'état de disponibilité.

Avantageusement, chaque mode de disponibilité spécifié par un utilisateur comprend en outre des règles de disponibilité spécifiant des périodes pendant lesquelles le mode de disponibilité est actif.

De préférence, l'état de joignabilité déterminé par le serveur de médiation de services peut prendre l'un des états suivants :
- joignable si le mode de disponibilité actif de l'utilisateur est à l'état disponible et si au moins un terminal de l'utilisateur est connecté au serveur de médiation de services,
- non joignable si l'utilisateur n'est pas disponible ou si aucun terminal de l'utilisateur n'est connecté au serveur de médiation de services,
- accès à l'état de joignabilité soumis à autorisation si l'utilisateur souhaite que son état de joignabilité ne soit fourni à d'autres utilisateurs qu'avec son autorisation préalable,
- en transfert si l'utilisateur a spécifié que les appels entrants qui lui sont destinés doivent être transférés vers un numéro d'appel spécifié dans le mode de disponibilité actif,
- inconnu si l'utilisateur demandé n'est pas inscrit auprès du serveur de médiation de services, ou s'il ne souhaite pas que son état de joignabilité soit accessible.

Selon un mode de réalisation de l'invention, la transmission des notifications d'événements par le serveur de médiation de services est effectuée sur demande de chaque service connecté.

Selon un autre mode de réalisation de l'invention, la transmission d'une notification d'un événement par le serveur de médiation de services est effectuée dès réception de l'événement si le service est connecté, et sinon l'événement est mémorisé dans un journal et est notifié au service dès que celui-ci se connecte au serveur de médiation de services.

L'invention concerne également un serveur de médiation de services de télécommunication rendus à une pluralité d'utilisateurs, par l'intermédiaire de terminaux de télécommunication connectés à différents réseaux de télécommunication, comprenant un module de coordination de services conçu pour coordonner les traitements effectués par les services de télécommunication pour le compte de chacun des utilisateurs.

Selon l'invention, ce serveur comprend en outre :
- au moins une base de données rassemblant l'ensemble des données concernant les utilisateurs, qui sont nécessaires au serveur de médiation de services et aux services,
- un serveur de disponibilité conçu pour gérer et déterminer à tout instant la disponibilité des utilisateurs, en fonction de modes de disponibilité actifs et de règles, spécifiés par les utilisateurs et mémorisés dans la base de données,
- un module de gestion de services conçu pour recevoir de chaque service une inscription spécifiant des événements à notifier aux services et/ou des événements émis par le service, et
- un module de notification d'événements conçu pour recevoir et notifier l'apparition d'événements aux services de télécommunication qui en ont fait la demande,
- le module de coordination de services comprenant des moyens pour déterminer un état de joignabilité de chaque utilisateur pour chacun de ses profils en fonction de l'existence d'au moins un terminal de l'utilisateur connecté au serveur, et du profil et du mode de disponibilité actifs de l'utilisateur, et des moyens pour transmettre à chaque terminal connecté l'état de joignabilité d'utilisateurs spécifiés dans une liste de contacts faisant partie d'un profil actif de l'utilisateur du terminal.

Selon un mode de réalisation de l'invention, ce serveur comprend en outre un module d'identification / authentification chargé d'identifier et d'authentifier les utilisateurs lorsqu'ils accèdent au serveur de médiation de services ou à certains services.

Selon un mode de réalisation de l'invention, ce serveur comprend en outre un module d'interface donnant accès au serveur de médiation de services par l'intermédiaire d'un réseau de télécommunication, ce module étant conçu pour recevoir des requêtes de traitement, émanant des services ou des utilisateurs, et pour les retransmettre vers un composant du serveur chargé d'effectuer le traitement demandé, et transmettre en réponse à ces requêtes les réponses fournies par les composants du serveur.

Avantageusement, le module d'interface comporte plusieurs composants dupliqués pour assurer une tolérance aux pannes.

Selon un mode de réalisation de l'invention, ce serveur comprend en outre un moniteur d'accès comprenant :
- des moyens pour connecter un terminal d'utilisateur au serveur de médiation et le déconnecter du serveur,
- des moyens pour connecter un service au serveur de médiation et le déconnecter du serveur,
- des moyens pour gérer en temps réel les différents services activés pour l'utilisateur,
- des moyens pour sélectionner un profil à activer et un mode de disponibilité dans le profil à activer,
- des moyens pour sélectionner des événements pour lesquels l'utilisateur souhaite être notifié de leur apparition, et
- des moyens pour sélectionner un terminal pour recevoir un appel entrant.

L'invention concerne également un programme d'ordinateur conçu pour être mis en oeuvre sur un serveur de médiation de services de télécommunication rendus à une pluralité d'utilisateurs, par l'intermédiaire de terminaux de télécommunication connectés à différents réseaux de télécommunication. Selon l'invention, ce programme comprend des instructions pour mettre en oeuvre les étapes du procédé défini ci-avant, exécutées par le serveur de médiation de services.

L'invention concerne également un serveur de télécommunication fournissant des services de télécommunication à une pluralité d'utilisateurs, par l'intermédiaire de terminaux de télécommunication connectés à différents réseaux de télécommunication. Selon l'invention, le serveur de télécommunication comprend :
- des moyens pour se connecter au serveur de médiation de services défini ci-avant,
- des moyens pour spécifier et transmettre au serveur de médiation de services des événements qui doivent lui être notifiés par le serveur de médiation de services, et/ou des événements qu'il est susceptible d'émettre vers le serveur de médiation de services, et
- des moyens pour recevoir du serveur de médiation de services des notifications d'événements provenant d'autres services de télécommunication et ayant été spécifiés comme devant lui être notifié.

L'invention concerne également un programme d'ordinateur conçu pour être mis en oeuvre sur un serveur de télécommunication fournissant des services de télécommunication à une pluralité d'utilisateurs, par l'intermédiaire de terminaux de télécommunication connectés à différents réseaux de télécommunication. Selon l'invention, ce programme comprend des instructions pour mettre en oeuvre les étapes du procédé défini ci-avant, exécutées par un service de télécommunication.

L'invention concerne en outre un système informatique comprenant une pluralité de terminaux de télécommunication d'utilisateurs connectés à différents réseaux de télécommunication, plusieurs serveurs fournissant des services de télécommunication pour le compte des utilisateurs, et un serveur de médiation de services tel que défini ci-avant.

Un mode de réalisation préféré de l'invention sera décrit ci-après, à titre d'exemple non limitatif, avec référence aux dessins annexés dans lesquels :
La figure 1 représente schématiquement un serveur de médiation de services selon l'invention ;
La figure 2 montre plus en détail un module de coordination de services mis en oeuvre par le serveur représenté sur la figure 1.

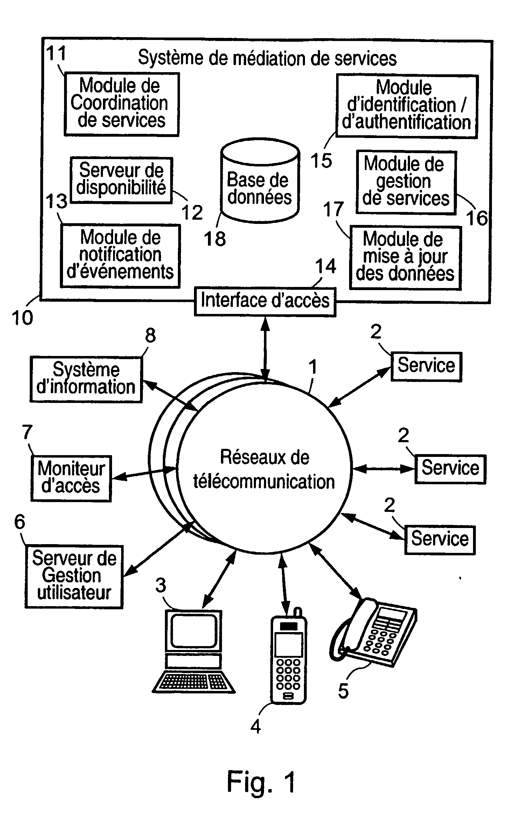

La figure 1 représente un serveur de médiation de services 10 selon l'invention, prévu pour se connecter à des réseaux de télécommunication 1, tel que des réseaux téléphoniques terrestres et cellulaires, et des réseaux informatiques tels que le réseau Internet.

Ce serveur est conçu pour fournir les fonctions nécessaires à la gestion d'un ensemble d'utilisateurs, de leurs profils et de services offerts par des opérateurs de télécommunication, chacun des utilisateurs ayant accès aux réseaux de télécommunication 1 par l'intermédiaire d'un ou plusieurs terminaux de types divers, tels qu'un ordinateur 3 par exemple de type PC ou PDA (Personal Digital Assistant), ou terminal téléphonique cellulaire 4 ou filaire 5. Les services gérés par le serveur sont rendus par exemple par des serveurs 2 également connectés aux réseaux de télécommunication 1, ou par des terminaux d'utilisateur.

Le serveur de médiation de services 10 selon l'invention comprend les composants suivants :
- un module 11 de coordination de services conçu pour assurer la cohérence de traitements effectués par différents services pour le compte d'un utilisateur,
- un serveur de disponibilité 12 conçu pour gérer et déterminer à tout instant la disponibilité des utilisateurs, en fonction de modes de disponibilité actifs et de règles spécifiées par les utilisateurs,
- un module 13 de notification d'événements conçu pour recevoir et notifier l'apparition d'événements à des services ou des utilisateurs qui en ont fait la demande, ou à des composants internes du serveur de médiation de services,
- un module 15 d'identification / authentification chargé d'identifier et d'authentifier les utilisateurs lorsqu'ils accèdent à certaines fonctions du serveur ou à certains services,
- un module 16 de gestion de services conçu pour recevoir des inscriptions de services et pour fournir sur requête les références d'un service inscrit,
- une ou plusieurs bases de données 18 rassemblant l'ensemble des données concernant les utilisateurs, qui sont nécessaires au serveur 10 de médiation de services et aux services,
- un module 17 de mise à jour des données mémorisées dans la base de données 18, et
- un module d'interface 14 donnant accès au serveur de médiation 10 par l'intermédiaire d'un réseau 1, ce module étant conçu pour recevoir des requêtes de traitement, émanant des services ou des utilisateurs, et pour les retransmettre vers le composant du serveur chargé d'effectuer le traitement demandé, et transmettre en réponse à ces requêtes les réponses fournies par les composants du serveur.

Pour accéder aux services offerts par le serveur 10 de médiation de services, chaque utilisateur doit être préalablement enregistré et disposer d'un identifiant ou numéro de contact par lequel il peut être joint indépendamment du terminal connecté à un instant donné au serveur. Il doit en outre définir un ou plusieurs profils qui sont mémorisés dans la base de données 18, et fournir des informations concernant les terminaux qu'il est susceptible d'utiliser et notamment les capacités de ces terminaux et les applications disponibles.

Pour modifier les données mémorisées dans la base de données 18, il est mis à la disposition des utilisateurs un serveur de gestion 6, par exemple ayant la forme d'un serveur Web ou WAP (Wireless Application Protocol). Ce serveur de gestion permet à chaque utilisateur de définir et tenir à jour un ou plusieurs profils associés chacun à un numéro de contact par lequel l'utilisateur peut être joint. Chaque profil d'utilisateur rassemble une liste de services auxquels l'utilisateur a souscrit, chacun des services de la liste étant éventuellement associé à des paramètres de personnalisation du service, et des modes de disponibilité.

Un utilisateur peut ainsi définir plusieurs profils, par exemple un profil personnel et un profil professionnel.

Un mode de disponibilité correspond à une activité de l'utilisateur, par exemple, réunion, déplacement, ... Chaque mode de disponibilité rassemble les informations suivantes :
- un identifiant de mode de disponibilité,
- un état de disponibilité, à savoir, disponible, non disponible, en transfert d'appel vers un numéro d'appel spécifié, ou inconnu si l'utilisateur ne souhaite pas rendre accessible son état de disponibilité,
- un éventuel identifiant de terminal ou de mode de communication (téléphone fixe, mobile, voix sur IP, messages écrits SMS (Short Message Service), MMS (Multimedia Messaging Service), messagerie électronique) permettant de transférer un appel entrant destiné à l'utilisateur vers le terminal ainsi identifié,
- un mode de notification (par exemple dans une messagerie),
- une liste de contacts auxquels s'applique l'état de disponibilité, et
- des règles de disponibilité spécifiant des périodes où le mode de disponibilité doit être actif.
   Alternativement, les règles de disponibilité peuvent être définies dans le profil en dehors des modes de disponibilité, et spécifier les modes à activer et désactiver en fonction de la date et l'heure, par exemple sous la forme d'un calendrier hebdomadaire, mensuel ou annuel.

Un profil d'utilisateur comprend également des listes de contacts dans lesquels sont spécifiés les contacts autorisés ou non à connaître l'état de joignabilité de l'utilisateur, et ceux dont l'utilisateur souhaite obtenir un état de joignabilité. L'état de joignabilité d'un utilisateur est déterminé en fonction de l'état de disponibilité actif et de la présence de celui-ci, c'est-à-dire l'existence d'un terminal de l'utilisateur accessible par le serveur, soit directement, soit par l'intermédiaire d'une service (par exemple de type portail). On définit ainsi cinq états de joignabilité :
- joignable : l'utilisateur est connecté et disponible,
- non joignable : l'utilisateur n'est pas connecté ou n'est pas disponible,
- accès à l'état de joignabilité soumis à autorisation : l'utilisateur souhaite que son état de joignabilité ne soit fourni qu'avec son autorisation préalable,
- en transfert : l'utilisateur a spécifié que les appels entrants qui lui sont destinés doivent être transférés vers un certain numéro d'appel spécifié dans le mode de disponibilité,
- inconnu : l'utilisateur demandé n'est pas inscrit auprès du serveur 10 de médiation de services, ou ne souhaite pas que l'on connaisse son état de joignabilité.

Par ailleurs, un moniteur d'accès 7, par exemple conçu sous la forme d'un composant logiciel installé dans chacun des terminaux d'utilisateur 3, 4, 5 ou sous la forme d'un serveur Web ou WAP, offre aux utilisateurs ou aux services les fonctions suivantes :
- connecter un terminal 3, 4, 5 au serveur de médiation 10 ou le déconnecter du serveur,
- connecter un service au serveur de médiation 10 ou le déconnecter du serveur,
- gérer en temps réel les différents services activés pour l'utilisateur,
- choisir un profil à activer et un mode dans le profil actif ou un niveau de disponibilité,
- s'abonner à la notification d'événements à sélectionner, tels que appel entrant, appel perdu, changement de l'état de disponibilité d'un contact, réception d'un nouveau message, mise à jour d'une jauge de consommation,
- choisir un terminal pour recevoir un appel entrant,
- suivre l'état d'une jauge de consommation, la consommation de ses forfaits de communication, et
- émettre et envoyer des messages urgents, un message urgent étant un message vocal ou écrit qui peut être envoyé par un utilisateur préalablement autorisé par l'appelé, et acheminé jusqu'à ce dernier indépendamment de son état de disponibilité.

Si le moniteur d'accès 7 se présente sous la forme d'un composant logiciel installé dans chaque terminal d'utilisateur, il peut être lancé automatiquement à la mise sous tension du terminal, en particulier si le terminal est de type téléphone mobile.

Le serveur de disponibilité 12 est conçu pour activer ou désactiver des modes de disponibilité en fonction des ordres reçus des utilisateurs ou en fonction des règles de disponibilité associées aux profils de ces derniers. Il permet également à un utilisateur d'obtenir l'état de disponibilité d'un contact, le cas échéant après en avoir demandé l'autorisation à l'intéressé. Le serveur de disponibilité est également conçu pour transformer les règles de disponibilités spécifiées par les utilisateurs pour les modes actifs en règles de filtrages directement interprétables par le module de coordination de services 11.

Le module 13 de notification d'événements comprend une fonction d'enregistrement / désenregistrement permettant à un service, un terminal par l'intermédiaire du moniteur d'accès, ou un composant du serveur 10 de médiation de services de s'enregistrer ou de se désenregistrer comme émetteur d'un ou plusieurs événements, et une fonction d'abonnement / désabonnement permettant à un service ou un composant du serveur de médiation de services de s'enregistrer ou se désenregistrer comme récepteur de notifications d'un ou plusieurs événements. Un événement peut être lié à un service (par exemple "nouveau service disponible") ou à un profil d'utilisateur (par exemple "dépôt d'un nouveau message vocal").

Lorsqu'un événement n'est plus émis par aucun service, par exemple à la suite de la déconnexion du dernier service émetteur de l'événement, le module 13 avertit les services abonnés à l'événement que l'événement n'est plus disponible. Inversement, le module 13 avertit également les services abonnés à un événement que cet événement est à nouveau susceptible d'être émis lorsqu'un service émetteur de cet événement s'est connecté au serveur 10.

Ce module comporte également une fonction de synchronisation permettant d'associer une notification d'événement à une réponse asynchrone de l'entité ayant reçu la notification d'événement, et une fonction de gestion d'un journal d'événements qui est mis à jour à chaque fois qu'un événement survient et qui rassemble pour chaque événement, les informations suivantes :
- sa date,
- son contenu,
- le service émetteur,
- une liste de profils destinataires de l'événement, et de services abonnés à l'événement, chaque service et profil étant associé à un indicateur signalant si oui ou non le service ou le profil a été notifié de l'événement.

Ce module offre deux modes de fonctionnement. Dans un premier mode appelé "push", les services abonnés à un événement sont automatiquement notifiés par le module 13 lorsque survient l'événement. Dans un second mode appelé "polling", un service abonné obtient les notifications d'événements survenus en interrogeant le module 13 via le module d'interface 14, soit périodiquement, soit à la demande.

En mode "push", la notification peut être effectuée d'une manière synchrone ou asynchrone selon que le service abonné est connecté ou non au moment où l'événement survient. A la suite de la notification d'un événement, le module 13 met à jour le journal d'événements.

Le module d'identification / authentification 15 permet également de retrouver un utilisateur en fonction d'un numéro de contact. En outre, pour authentifier un utilisateur, il peut faire appel à des serveurs externes d'authentification.

Le module 16 de gestion de services est conçu pour recevoir des services des demandes d'inscriptions contenant chacune un identifiant du service, les actions qu'il peut rendre, et éventuellement une classe de service. Ces informations sont introduites dans un annuaire de service par exemple intégré dans la base de données 18. En outre, le module 16 est notifié de la connexion / déconnexion d'un service pour tenir à jour dans l'annuaire de service un indicateur par service signalant si le service est ou non connecté au serveur 10.
Le module 16 est également conçu pour recevoir des demandes de référence d'un service afin de permettre d'établir une communication directe avec celui-ci. Une telle demande contient le nom du service et celui de son fournisseur.

Le module 17 de mise à jour des données est conçu pour recevoir des informations sur les utilisateurs provenant de systèmes d'informations externes 8 mis en oeuvre par des services pour gérer leurs abonnés respectifs. Ce module assure deux fonctions principales, à savoir une fonction de mise à jour de la base de données 18 et une fonction de transmission de "tickets de prestation" permettant la facturation des utilisateurs pour les services utilisés, vers un système de collecte de tels tickets.

La mise à jour de la base de données peut être effectuée soit en mode "pull" soit en mode "push".
Dans le mode "pull", le module 17 récupère soit à la demande, soit périodiquement les données des systèmes d'information 8, auprès de serveurs distants tels que des serveurs FTP (File Transfer Protocol). Les données récupérées sont analysées, mises en forme et introduites dans la base de données 18.
Alternativement, le module 17 peut transmettre les données récupérées aux autres composants du serveur 10 qui sont concernés par ces données, la mise à jour de la base de données étant effectuée par ces autres composants.

Dans le mode "push", les systèmes d'information transmettent leurs données à l'interface d'accès 14 du serveur 10, soit périodiquement, soit à la suite du remplissage d'un fichier de mise à jour, selon le mode de fonctionnement du système d'information. L'interface d'accès retransmet ensuite les données reçues au module de mise à jour 17.

Les bases de données 18 peuvent être de type relationnel (SGBDR) ou objet (SGBDO), ou encore annuaire LDAP (Lightweight Directory Access Protocol).

L'interface 14 est avantageusement conçue pour assurer une certaine tolérance aux pannes en répartissant les requêtes reçues sur plusieurs composants dupliqués. Elle est réalisée de préférence en faisant appel à des technologies standards telles que CORBA (Common Object Request Broker Architecture), RMI (Remote Method Invocation) ou SOAP (Simple Object Access Protocol).

Le module 11 de coordination de services est conçu pour :
- gérer les connexions de services au serveur de médiation 10,
- gérer une session d'accès d'utilisateur pour chaque profil d'utilisateur activé sur un terminal connecté au serveur, et une session de service pour chaque service activé par un utilisateur,
- déterminer la joignabilité de chaque utilisateur, en fonction de l'existence d'au moins une session d'accès pour l'utilisateur (correspondant à un profil activé par l'utilisateur),
- gérer en temps réel la valorisation de l'utilisation des services par les différents utilisateurs.

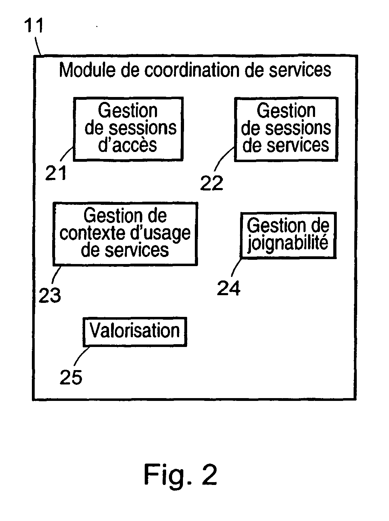

A cet effet, tel que représenté sur la figure 2, le module 11 comprend :
- une fonction 21 de gestion de sessions d'accès, pour créer / supprimer / modifier une session d'accès respectivement à chaque activation / désactivation d'un profil d'utilisateur,
- une fonction 22 de gestion de sessions de services, pour créer / supprimer /modifier à la demande de l'utilisateur une session de service pour chaque service mentionné dans chaque profil actif,
- une fonction 23 de gestion de contexte d'usage de services pour coordonner les opérations réalisées par plusieurs services pour un utilisateur,
- une fonction 24 de gestion de joignabilité pour déterminer la joignabilité de chaque utilisateur en fonction de l'existence d'au moins une session d'accès active pour cet utilisateur, du profil et du mode de disponibilité actifs de ce dernier, et
- une fonction 25 de valorisation de l'accès et/ou de l'usage d'un service par un utilisateur.

A la connexion d'un terminal 3, 4, 5 d'utilisateur au serveur 10, le module de coordination de services 11 demande à la fonction 21 de gestion de sessions d'accès de créer une session d'accès pour chaque profil à activer. A la sélection par l'utilisateur d'un service, la fonction 22 crée également une session de service pour le service sélectionné.

La création d'une session de service implique qu'auparavant l'utilisateur ait été identifié et authentifié en faisant appel au module d'identification et d'authentification 15.

La fonction de gestion de la joignabilité de chaque utilisateur consiste à déterminer pour un appel entrant destiné à un utilisateur ou à la suite d'une requête émise par un service, si l'appel doit être accepté, refusé, notifié ou renvoyé vers un numéro de renvoi ou une messagerie, en fonction de l'état de joignabilité de l'utilisateur, et éventuellement des règles de filtrage fournies par le serveur de disponibilité et de l'identité du contact émetteur de l'appel. Cette fonction fait donc appel à la fonction 21 de gestion de sessions d'accès pour déterminer si l'utilisateur est connecté au serveur, ainsi qu'au serveur de disponibilité 12 pour obtenir le mode de disponibilité de l'utilisateur et les règles de filtrage.

Grâce à ces dispositions, un utilisateur peut définir qu'il est disponible pour certains contacts, et non disponible pour d'autres contacts. Il peut également définir les moyens de communication à utiliser pour recevoir des appels entrants et pour recevoir des notifications d'événements (messagerie vocale, écrite). Il peut autoriser certains contacts à obtenir son état de joignabilité, connaître les modes de communications (vocal, écrit, immédiat, différé) qu'ils peuvent utiliser pour le joindre.

Ainsi, le moniteur d'accès 7 est avantageusement conçu pour afficher la liste des contacts de l'utilisateur, chaque contact étant associé à un indicateur signalant l'état de joignabilité du contact. Il peut également permettre à l'utilisateur de déclencher l'établissement d'un appel vers l'un des contacts de la liste à la suite de la sélection de celui-ci et d'un type de communication (vocal, écrit, différé, immédiat) disponible pour ce contact.

Cette action de sélection déclenche l'émission par le serveur 10 d'une notification d'événement "appel entrant" sur le ou les terminaux accessibles du contact appelé pour le profil considéré, le moniteur d'accès signalant à l'utilisateur appelé la réception d'une telle notification. Le mode de signalement utilisé dépend du terminal. Dans le cas d'un ordinateur de type PC ou PDA, ce signalement peut être effectué sous la forme d'un "pop up". Sur un téléphone mobile, il peut être effectué par une application "Simtoolkit".
A la suite de la réception d'une telle notification, l'utilisateur appelé peut choisir le terminal avec lequel il souhaite prendre l'appel. A l'établissement de la communication entre deux utilisateurs, le module de valorisation déclenche un comptage de la durée d'appel. Si pendant une communication entre deux utilisateurs, un autre utilisateur tente d'établir un appel avec l'un de ceux-ci, l'utilisateur appelé reçoit une notification d'événement d'appel entrant sur le ou les terminaux accessibles de l'appelé pour le profil considéré. A la fin d'une communication entre deux utilisateurs, le module de valorisation émet un ticket de prestation et met à jour une jauge de consommation sur les terminaux en envoyant un message à cet effet aux terminaux connectés sur le profil appelé (sur lequel s'est fait l'appel entrant), ce message contenant des informations relatives à un forfait de communication (montant maximum, montant consommé).
A la déconnexion d'un terminal, le module de coordination de services 11 détruit les sessions d'accès relatives aux profils activés sur ce terminal. Les sessions de services rattachées à ces sessions d'accès sont également détruites.

Les services doivent préalablement s'inscrire auprès du serveur 10 et être connectés à celui-ci pour rendre des prestations aux utilisateurs. A la connexion au serveur, un service indique au serveur les événements qui doivent lui être notifiés. Lors de l'accès par un utilisateur à un service inscrit et connecté, le service déclenche une procédure d'identification et d'authentification de l'utilisateur et demande au serveur les informations relatives à ce dernier pour vérifier qu'il possède les autorisations nécessaires pour accéder au service. Au début et à la fin de la fourniture d'une prestation, le service fait appel au serveur pour comptabiliser l'usage du service par l'utilisateur, en vue de sa valorisation. Lorsque aucun utilisateur accède à un service, le service peut se déconnecter du serveur.

Le serveur de médiation de services selon l'invention est avantageusement réalisé sous la forme d'un composant réutilisable, appelé "brique blanche", de manière à être robuste et tolérant aux pannes, et être intégrable à faible coût dans tout serveur assurant la fourniture de services.

Grâce à ces dispositions, le serveur de médiation de services selon l'invention permet aux utilisateurs d'accéder à leurs services personnalisés à partir de n'importe quel terminal de télécommunication et n'importe quel accès à un réseau de télécommunication, tout en simplifiant l'accès à ces services. Il permet également aux utilisateurs de gérer leur disponibilité vis-à-vis des autres utilisateurs, et ce indépendamment du réseau de télécommunication.

## Revendications

1. Procédé de coordination de services de télécommunication (2) rendus à une pluralité d'utilisateurs, par l'intermédiaire de terminaux de télécommunication (3, 4, 5) connectés à différents réseaux (1) de télécommunication, le procédé comprenant des étapes au cours desquelles un serveur de médiation de services (10) coordonne les traitements effectués par différents services de télécommunication pour le compte de chacun des utilisateurs,
**caractérisé en ce qu'**il comprend en outre des étapes au cours desquelles :
- les services de télécommunication (2) se connectent au serveur de médiation de services (10) et spécifient des événements qui doivent leur être notifiés par le serveur de médiation de services, et/ou des événements qu'ils sont susceptibles d'émettre vers le serveur de médiation de services,
- les terminaux de télécommunication (3, 4, 5) des utilisateurs se connectent au serveur de médiation de services, transmettent au serveur de médiation de services des profils d'utilisateur spécifiant des modes de disponibilité, qui sont mémorisés dans une base de données (18), activent des profils et des modes de disponibilité préalablement spécifiés, et accèdent aux services connectés,
- le serveur de médiation de services détermine un état de joignabilité de chaque utilisateur en fonction de l'existence d'au moins un terminal de l'utilisateur connecté au serveur de médiation de services, et du profil et du mode de disponibilité actifs de l'utilisateur,
- le serveur de médiation de services transmet à chaque terminal connecté l'état de joignabilité d'utilisateurs spécifiés dans une liste de contacts faisant partie du profil actif de l'utilisateur du terminal,
- le serveur de médiation de services transmet, pour chaque événement reçu d'un service, une notification d'événement aux services connectés ayant spécifié que l'événement doit leur être notifié.

2. Procédé selon la revendication 1,
**caractérisé en ce que** chaque mode de disponibilité spécifié par un utilisateur comprend :
- un état de disponibilité pouvant prendre les valeurs disponible, non disponible, en transfert d'appel vers un numéro d'appel spécifié, ou inconnu si l'utilisateur ne souhaite pas rendre accessible son état de disponibilité,
- un éventuel identifiant de terminal vers lequel transférer un appel entrant destiné à l'utilisateur,
- un mode de notification d'événements, et
- une liste de contacts auxquels s'applique l'état de disponibilité.

3. Procédé selon la revendication 2,
**caractérisé en ce que** chaque mode de disponibilité spécifié par un utilisateur comprend en outre des règles de disponibilité spécifiant des périodes pendant lesquelles le mode de disponibilité est actif.

4. Procédé selon l'une des revendications 1 à 3,
**caractérisé en ce que** l'état de joignabilité déterminé par le serveur de médiation de services peut prendre l'un des états suivants :
- joignable si le mode de disponibilité actif de l'utilisateur est à l'état disponible et si au moins un terminal de l'utilisateur est connecté au serveur de médiation de services,
- non joignable si l'utilisateur n'est pas disponible ou si aucun terminal de l'utilisateur n'est connecté au serveur de médiation de services,
- accès à l'état de joignabilité soumis à autorisation si l'utilisateur souhaite que son état de joignabilité ne soit fourni à d'autres utilisateurs qu'avec son autorisation préalable,
- en transfert si l'utilisateur a spécifié que les appels entrants qui lui sont destinés doivent être transférés vers un numéro d'appel spécifié dans le mode de disponibilité actif,
- inconnu si l'utilisateur demandé n'est pas inscrit auprès du serveur de médiation de services, ou s'il ne souhaite pas que son état de joignabilité soit accessible.

5. Procédé selon l'une des revendications 1 à 4,
**caractérisé en ce que** la transmission des notifications d'événements par le serveur de médiation de services est effectuée sur demande de chaque service connecté.

6. Procédé selon l'une des revendications 1 à 4,
**caractérisé en ce que** la transmission d'une notification d'un événement par le serveur de médiation de services est effectuée dès réception de l'événement si le service est connecté, et sinon l'événement est mémorisé dans un journal et est notifié au service dès que celui-ci se connecte au serveur de médiation de services.

7. Serveur de médiation de services de télécommunication rendus à une pluralité d'utilisateurs, par l'intermédiaire de terminaux de télécommunication connectés à différents réseaux de télécommunication, comprenant un module (11) de coordination de services conçu pour coordonner les traitements effectués par les services de télécommunication pour le compte de chacun des utilisateurs,
**caractérisé en ce qu'**il comprend en outre :
- au moins une base de données (18) rassemblant l'ensemble des données concernant les utilisateurs, qui sont nécessaires au serveur (10) de médiation de services et aux services,
- un serveur de disponibilité (12) conçu pour gérer et déterminer à tout instant la disponibilité des utilisateurs, en fonction de modes de disponibilité actifs et de règles, spécifiés par les utilisateurs et mémorisés dans la base de données,
- un module (16) de gestion de services conçu pour recevoir de chaque service une inscription spécifiant des événements à notifier aux services et/ou des événements émis par le service, et
- un module (13) de notification d'événements conçu pour recevoir et notifier l'apparition d'événements aux services de télécommunication qui en ont fait la demande,
- le module (11) de coordination de services comprenant des moyens pour déterminer un état de joignabilité de chaque utilisateur pour chacun de ses profils en fonction de l'existence d'au moins un terminal de l'utilisateur connecté au serveur, et du profil et du mode de disponibilité actifs de l'utilisateur, et des moyens pour transmettre à chaque terminal connecté l'état de joignabilité d'utilisateurs spécifiés dans une liste de contacts faisant partie d'un profil actif de l'utilisateur du terminal.

8. Serveur de médiation de services selon la revendication 7,
**caractérisé en ce qu'**il comprend en outre un module (15) d'identification / authentification chargé d'identifier et d'authentifier les utilisateurs lorsqu'ils accèdent au serveur (10) de médiation de services ou à certains services.

9. Serveur de médiation de services selon la revendication 7 ou 8,
**caractérisé en ce qu'**il comprend en outre un module d'interface (14) donnant accès au serveur (10) de médiation de services par l'intermédiaire d'un réseau de télécommunication (1), ce module étant conçu pour recevoir des requêtes de traitement, émanant des services ou des utilisateurs, et pour les retransmettre vers un composant du serveur chargé d'effectuer le traitement demandé, et transmettre en réponse à ces requêtes les réponses fournies par les composants du serveur.

10. Serveur de médiation de services selon la revendication 9,
**caractérisé en ce que** le module d'interface (14) comporte plusieurs composants dupliqués pour assurer une tolérance aux pannes.

11. Serveur de médiation de services selon l'une des revendications 7 à 10,
**caractérisé en ce qu'**il comprend en outre un moniteur d'accès (7) comprenant :
- des moyens pour connecter un terminal d'utilisateur (3, 4, 5) au serveur de médiation (10) et le déconnecter du serveur,
- des moyens pour connecter un service (2) au serveur de médiation (10) et le déconnecter du serveur,
- des moyens pour gérer en temps réel les différents services activés pour l'utilisateur,
- des moyens pour sélectionner un profil à activer et un mode de disponibilité dans le profil à activer,
- des moyens pour sélectionner des événements pour lesquels l'utilisateur souhaite être notifié de leur apparition, et
- des moyens pour sélectionner un terminal pour recevoir un appel entrant.

12. Programme d'ordinateur conçu pour être mis en oeuvre sur un serveur de médiation de services de télécommunication rendus à une pluralité d'utilisateurs, par l'intermédiaire de terminaux de télécommunication (3, 4, 5) connectés à différents réseaux de télécommunication (1),
**caractérisé en ce qu'**il comprend des instructions pour mettre en oeuvre les étapes du procédé selon l'une des revendications 1 à 6, exécutées par le serveur de médiation de services.

13. Serveur de télécommunication (2) fournissant des services de télécommunication à une pluralité d'utilisateurs, par l'intermédiaire de terminaux de télécommunication (3, 4, 5) connectés à différents réseaux (1) de télécommunication,
**caractérisé en ce qu'**il comprend :
- des moyens pour se connecter à un serveur de médiation de services (10) selon l'une des revendications 7 à 11,
- des moyens pour spécifier et transmettre au serveur de médiation de services des événements qui doivent lui être notifiés par le serveur de médiation de services, et/ou des événements qu'il est susceptible d'émettre vers le serveur de médiation de services, et
- des moyens pour recevoir du serveur de médiation de services des notifications d'événements provenant d'autres services de télécommunication et ayant été spécifiés comme devant lui être notifié.

14. Programme d'ordinateur conçu pour être mis en oeuvre sur un serveur de télécommunication (2) fournissant des services de télécommunication à une pluralité d'utilisateurs, par l'intermédiaire de terminaux de télécommunication (3, 4, 5) connectés à différents réseaux (1) de télécommunication,
**caractérisé en ce qu'**il comprend des instructions pour mettre en oeuvre les étapes du procédé selon l'une des revendications 1 à 6, exécutées par un service de télécommunication.

15. Système informatique comprenant une pluralité de terminaux de télécommunication (3, 4, 5) d'utilisateurs connectés à différents réseaux de télécommunication (1), plusieurs serveurs (2) fournissant des services de télécommunication pour le compte des utilisateurs, et un serveur (10) de médiation de services conçu pour coordonner les traitements effectués par les services de télécommunication (2),
**caractérisé en ce que** le serveur (10) de médiation de services est conforme à l'une des revendications 7 à 11.

## Claims

1. Method for coordinating telecommunication services (2) provided to a plurality of users, by means of telecommunication terminals (3, 4, 5) connected to various telecommunications networks (1), the method comprising steps during which a services mediation server (10) coordinates the processes carried out by various telecommunication services on behalf of each of the users,
**characterized in that** it also comprises steps during which:
- the telecommunication services (2) connect to the services mediation server (10) and specify events that must be reported to them by the services mediation server, and/or events that they are likely to send to the services mediation server,
- the telecommunication terminals (3, 4, 5) of the users connect to the services mediation server, transmit to the services mediation server user profiles specifying availability modes, which are stored in a database (18), activate previously specified profiles and availability modes, and access the connected services,
- the services mediation server determines a reachability state of each user according to the existence of at least one user terminal connected to the services mediation server, and of the active profile and availability mode of the user,
- the services mediation server transmits to each connected terminal the reachability state of users specified in a list of contacts forming part of the active profile of the terminal user,
- the services mediation server transmits, for each event received from a service, an event notification to the connected services that have specified that the event must be reported to them.

2. Method according to Claim 1, **characterized in that** each availability mode specified by a user comprises:
- an availability state that is able to take the values available, unavailable, call being transferred to a specified telephone number, or unknown if the user does not wish to make his availability state accessible,
- a possible terminal identifier to which an incoming call intended for the user is to be transferred,
- an event notification mode, and
- a list of contacts to whom the availability state applies.

3. Method according to Claim 2, **characterized in that** each availability mode specified by a user also comprises availability rules specifying periods during which the availability mode is active.

4. Method according to one of Claims 1 to 3,
**characterized in that** the reachability state determined by the services mediation server may take one of the following states:
- reachable if the active availability mode of the user is in the available state and if at least one terminal of the user is connected to the services mediation server,
- unreachable if the user is not available or if no terminal of the user is connected to the services mediation server,
- access to the reachability state subjected to authorization if the user wishes his reachability state to be supplied to other users only with his prior authorization,
- being transferred, if the user has specified that the incoming calls intended for him must be transferred to a telephone number specified in the active availability mode,
- unknown, if the requested user is not listed with the services mediation server, or if he does not wish his reachability state to be accessible.

5. Method according to one of Claims 1 to 4,
**characterized in that** the transmission of the event notifications by the services mediation server is carried out at the request of each connected service.

6. Method according to one of Claims 1 to 4,
**characterized in that** the transmission of an event notification by the services mediation server is carried out on receipt of the event if the service is connected, and, if not, the event is stored in a log and is reported to the service as soon as the latter connects to the services mediation server.

7. Server for the mediation of telecommunication services provided to a plurality of users, by means of telecommunication terminals connected to various telecommunication networks, comprising a services coordination module (11) designed to coordinate the processes carried out by the telecommunication services on behalf of each of the users,
**characterized in that** it also comprises:
- at least one database (18) containing all the data concerning the users, that are necessary to the services mediation server (10) and to the services,
- an availability server (12) designed to manage and determine at all times the availability of the users, according to active availability modes and rules, specified by the users and stored in the database,
- a services management module (16) designed to receive from each service a record specifying events to be reported to the services and/or events sent by the service, and
- an events notification module (13) designed to receive and report the occurrence of events to the telecommunication services that have requested them,
- the services coordination module (11) comprising means for determining a reachability state of each user for each of his profiles depending on the existence of at least one terminal of the user connected to the server, and of the active profile and availability mode of the user, and of the means for transmitting to each connected terminal the reachability state of users specified in a list of contacts forming part of an active profile of the terminal user.

8. Services mediation server according to Claim 7,
**characterized in that** it also comprises an identification/authentication module (15) responsible for identifying and authenticating the users when they access the services mediation server (10) or certain services.

9. Services mediation server according to Claim 7 or 8, **characterized in that** it also comprises an interface module (14) providing access to the services mediation server (10) via a telecommunication network (1), this module being designed to receive processing requests originating from services or users, and for retransmitting them to a component of the server responsible for carrying out the requested process, and transmitting in response to these requests the responses supplied by the components of the server.

10. Services mediation server according to Claim 9,
**characterized in that** the interface module (14) comprises several components that are duplicated to ensure a fault tolerance.

11. Services mediation server according to one of Claims 7 to 10, **characterized in that** it also comprises an access monitor (7) comprising:
- means for connecting a user terminal (3, 4, 5) to the mediation server (10) and disconnecting it from the server,
- means for connecting a service (2) to the mediation server (10) and disconnecting it from the server,
- means for real time management of the various services activated for the user,
- means for selecting a profile to be activated and an availability mode in the profile to be activated,
- means for selecting events for which the user wishes to be notified of their occurrence, and
- means for selecting a terminal for receiving an incoming call.

12. Computer program designed to be used on a mediation server for telecommunication services provided to a plurality of users, by means of telecommunication terminals (3, 4, 5) connected to various telecommunication networks (1),
**characterized in that** it comprises instructions for implementing the steps of the method according to one of Claims 1 to 6, executed by the services mediation server.

13. Telecommunication server (2) supplying telecommunication services to a plurality of users, by means of telecommunication terminals (3, 4, 5) connected to various telecommunication networks (1), **characterized in that** it comprises:
- means for connecting to a services mediation server (10) according to one of Claims 7 to 11,
- means for specifying and transmitting to the services mediation server events that must be reported to it by the services mediation server, and/or events that it is likely to send to the services mediation server, and
- means for receiving from the services mediation server event notifications originating from other telecommunication services and having been specified as having to be reported to it.

14. Computer program designed to be used on a telecommunication server (2) supplying telecommunication services to a plurality of users, by means of telecommunication terminals (3, 4, 5) connected to various telecommunication networks (1), **characterized in that** it comprises instructions for applying the steps of the method according to one of Claims 1 to 6, executed by a telecommunication service.

15. Computer system comprising a plurality of telecommunication terminals (3, 4, 5) of users connected to various telecommunication networks (1), several servers (2) supplying telecommunication services on behalf of the users, and a services mediation server (10) designed to coordinate the processes carried out by the telecommunication services (2), **characterized in that** the services mediation server (10) complies with one of Claims 7 to 11.

## Patentansprüche

1. Verfahren zum Koordinieren von Telekommunikationsdiensten (2), die für mehrere Anwender über Telekommunikationsendgeräte (3, 4, 5), die an verschiedene Telekommunikationsnetze (1) angeschlossen sind, zur Verfügung gestellt werden, wobei das Verfahren Schritte enthält, in deren Verlauf ein Dienstvermittlungsserver (10) die von verschiedenen Telekommunikationsdiensten ausgeführten Verarbeitungen auf Rechnung jedes der Anwender koordiniert,
**dadurch gekennzeichnet, dass** es außerdem Schritte enthält, in deren Verlauf:
- die Telekommunikationsdienste (2) sich mit dem Dienstvermittlungsserver (10) verbinden und Ereignisse, die ihnen durch den Dienstvermittlungsserver gemeldet werden sollen, und/oder Ereignisse, die sie zum Dienstvermittlungsserver senden könnten, spezifizieren,
- die Telekommunikationsendgeräte (3, 4, 5) der Anwender sich mit dem Dienstvermittlungsserver verbinden, an den Dienstvermittlungsserver Anwenderprofile übertragen, die die in einer Datenbank (18) gespeicherten Verfügbarkeitsbetriebsarten spezifizieren, Profile und Verfügbarkeitsbetriebsarten, die vorher spezifiziert worden sind, aktivieren und auf die verbundenen Dienste zugreifen,
- der Dienstvermittlungsserver einen Anschließbarkeitszustand jedes Anwenders als Funktion des Vorhandenseins wenigstens eines mit dem Dienstvermittlungsserver verbundenen Endgeräts des Anwenders und des aktiven Profils und der aktiven Verfügbarkeitsbetriebsart des Anwenders bestimmt,
- der Dienstvermittlungsserver an jedes angeschlossene Endgerät den Anschließbarkeitszustand von Anwendern, die in einer einen Teil des aktiven Profils des Anwenders des Endgeräts bildenden Kontaktliste spezifiziert sind, überträgt,
- der Dienstvermittlungsserver für jedes von einem Dienst empfangene Ereignis eine Ereignismeldung an die verbundenen Dienste überträgt, die spezifiziert haben, dass ihnen das Ereignis gemeldet werden soll.

2. Verfahren nach Anspruch 1,
**dadurch gekennzeichnet, dass** jede durch einen Anwender spezifizierte Verfügbarkeitsbetriebsart enthält:
- einen Verfügbarkeitszustand, der die Werte "verfügbar", "nicht verfügbar", "Anrufweiterschaltung zu einer bestimmten Rufnummer" oder "unbekannt", falls der Anwender seinen Verfügbarkeitszustand nicht zugänglich machen will, annehmen kann,
- eine eventuelle Kennung eines Endgeräts, zu dem ein für den Anwender bestimmter ankommender Anruf geschaltet werden soll,
- eine Ereignismeldebetriebsart und
- eine Liste von Kontakten, auf die der Verfügbarkeitszustand Anwendung findet.

3. Verfahren nach Anspruch 2,
**dadurch gekennzeichnet, dass** jede durch einen Anwender spezifizierte Verfügbarkeitsbetriebsart außerdem Verfügbarkeitsregeln enthält, die Perioden spezifizieren, in denen die Verfügbarkeitsbetriebsart aktiv ist.

4. Verfahren nach einem der Ansprüche 1 bis 3,
**dadurch gekennzeichnet, dass** der von dem Dienstvermittlungsserver bestimmte Anschließbarkeitszustand einen der folgenden Zustände annehmen kann:
- anschließbar, falls die aktive Verfügbarkeitsbetriebsart des Anwenders im "verfügbar" Zustand ist und falls wenigstens ein Endgerät des Anwenders mit dem Dienstvermittlungsserver verbunden ist,
- nicht anschließbar, falls der Anwender nicht verfügbar ist oder falls kein Endgerät des Anwenders mit dem Dienstvermittlungsserver verbunden ist,
- genehmigungspflichtige Zugriff auf den Anschließbarkeitszustand, , falls der Anwender wünscht, dass sein Anschließbarkeitszustand nur mit seiner vorherigen Genehmigung an andere Anwender weitergegeben wird,
- in Weiterleitung, falls der Anwender spezifiziert hat, dass die ankommende Anrufe, die für ihn bestimmt sind, zu einer in der aktiven Verfügbarkeitsbetriebsart bestimmten Rufnummer weitergeschaltet werden sollen,
- unbekannt, falls der aufgeforderte Anwender bei dem Dienstvermittlungsserver nicht eingeschrieben ist oder falls er nicht wünscht, dass sein Anschließbarkeitszustand zugänglich ist.

5. Verfahren nach einem der Ansprüche 1 bis 4,
**dadurch gekennzeichnet, dass** die Übertragung der Ereignismeldungen durch den Dienstvermittlungsserver auf Anforderung jedes verbundenen Dienstes ausgeführt wird.

6. Verfahren nach einem der Ansprüche 1 bis 4,
**dadurch gekennzeichnet, dass** die Übertragung einer Meldung eines Ereignisses durch den Dienstvermittlungsserver ab dem Empfang des Ereignisses ausgeführt wird, falls der Dienst verbunden ist, während andernfalls das Ereignis in einem Journal gespeichert wird und dem Dienst gemeldet wird, sobald sich dieser mit dem Dienstvermittlungsserver verbindet.

7. Vermittlungsserver für Telekommunikationsdienste, die mehreren Anwendern über Telekommunikationsendgeräte, die mit verschiedenen Telekommunikationsnetzen verbunden sind, zur Verfügung gestellt werden, mit einem Modul (11) zur Koordination der Dienste, das entworfen ist, um die von den Telekommunikationsdiensten ausgeführten Verarbeitungen auf Rechnung jedes der Anwender zu koordinieren,
**dadurch gekennzeichnet, dass** er außerdem umfasst:
- wenigstens eine Datenbank (18), die die Gesamtheit der Daten, die die Anwender betreffen und für den Dienstvermittlungsserver (10) sowie für die Dienste notwendig sind, enthält,
- einen Verfügbarkeitsserver (12), der entworfen ist, um zu jedem Zeitpunkt die Verfügbarkeit der Anwender als Funktion der aktiven Verfügbarkeitsbetriebsarten und von Regeln, die von den Anwendern spezifiziert und in der Datenbank gespeichert sind, zu managen und zu bestimmen,
- ein Modul (16) für das Management der Dienste, das entworfen ist, um von jedem Dienst einen Eintrag zu empfangen, der Ereignisse, die den Diensten gemeldet werden sollen, und/oder Ereignisse, die von dem Dienst gesendet werden, spezifiziert, und
- ein Modul (13) zum Melden von Ereignissen, das entworfen ist, um das Auftreten von Ereignissen zu empfangen und den Telekommunikationsdiensten, die ihn dazu aufgefordert haben, zu melden,
- wobei das Dienstkoordinationsmodul (11) Mittel enthält, um einen Anschließbarkeitszustand jedes Anwenders für jedes seiner Profile als Funktion des Vorhandenseins wenigstens eines Endgeräts des Anwenders, das mit dem Server verbunden ist, und des aktiven Profils und der aktiven Verfügbarkeitsbetriebsart des Anwenders zu bestimmen, und Mittel enthält, um an jedes angeschlossene Endgerät den Anschließbarkeitszustand von Anwendern, die in einer einen Teil eines aktiven Profils des Anwenders des Endgeräts bildenden Kontaktliste spezifiziert sind, zu übertragen.

8. Dienstvermittlungsserver nach Anspruch 7,
**dadurch gekennzeichnet, dass** er außerdem ein Modul (15) zum Identifizieren/Authentifizieren enthält, das die Aufgabe hat, die Anwender zu identifizieren und zu authentifizieren, wenn sie auf den Dienstvermittlungsserver (10) oder auf bestimmte Dienste zugreifen.

9. Dienstvermittlungsserver nach Anspruch 7 oder 8,
**dadurch gekennzeichnet, dass** er außerdem ein Schnittstellenmodul (14) enthält, das Zugriff auf den Dienstvermittlungsserver (10) über ein Telekommunikationsnetz (1) schafft, wobei dieses Modul entworfen ist, um Verarbeitungsanforderungen zu empfangen, die von Diensten oder Anwendern ausgegeben werden, und um sie wieder zu einer Komponente des Servers zu übertragen, der die Aufgabe hat, die geforderte Verarbeitung auszuführen und in Reaktion auf diese Anforderungen die von den Komponenten des Servers gelieferten Antworten zu übertragen.

10. Dienstvermittlungsserver nach Anspruch 9,
**dadurch gekennzeichnet, dass** das Schnittstellenmodul (14) mehrere duplizierte Komponenten enthält, um eine Fehlertoleranz zu gewährleisten.

11. Dienstvermittlungsserver nach einem der Ansprüche 7 bis 10,
**dadurch gekennzeichnet, dass** er außerdem eine Zugriffsüberwachungseinrichtung (7) enthält, die enthält:
- Mittel, um ein Anwenderendgerät (3, 4, 5) mit dem Vermittlungsserver (10) zu verbinden und von ihm zu trennen,
- Mittel, um einen Dienst (2) mit dem Vermittlungsserver (10) zu verbinden und ihn von ihm zu trennen,
- Mittel, um in Echtzeit die für den Anwender aktivierten verschiedenen Dienste zu managen,
- Mittel, um ein zu aktivierendes Profil und eine Verfügbarkeitsbetriebsart in dem zu aktivierenden Profil auszuwählen,
- Mittel, um Ereignisse auszuwählen, für die der Anwender wünscht, dass ihr Auftreten ihm gemeldet wird, und
- Mittel, um ein Endgerät auszuwählen, um einen ankommenden Anruf zu empfangen.

12. Computerprogramm, das entworfen ist, um in einem Vermittlungsserver für Telekommunikationsdienste ausgeführt zu sein, die mehreren Anwendern über Telekommunikationsendgeräte (3, 4, 5), die mit verschiedenen Telekommunikationsnetzen (1) verbunden sind, zur Verfügung gestellt werden,
**dadurch gekennzeichnet, dass** es Befehle enthält, um die Schritte des Verfahrens nach einem der Ansprüche 1 bis 6 auszuführen, die von dem Dienstvermittlungsserver ausgeführt werden.

13. Telekommunikationsserver (2), der Telekommunikationsdienste an mehrere Anwender über Telekommunikationsendgeräte (3, 4, 5), die mit verschiedenen Telekommunikationsnetzen (1) verbunden sind, liefert,
**dadurch gekennzeichnet, dass** er enthält:
- Mittel, um sich mit einem Dienstvermittlungsserver (10) nach einem der Ansprüche 7 bis 11 zu verbinden,
- Mittel, um Ereignisse, die ihm von dem Dienstvermittlungsserver gemeldet werden sollen, und/oder Ereignisse, die er zu dem Dienstvermittlungsserver senden könnte, zu spezifizieren und an den Dienstvermittlungsserver zu übertragen und
- Mittel, um von dem Dienstvermittlungsserver Meldungen über Ereignisse zu empfangen, die von anderen Telekommunikationsdiensten stammen und für die spezifiziert worden ist, dass sie ihm gemeldet werden sollen.

14. Computerprogramm, das entworfen ist, um in einem Telekommunikationsserver (2) ausgeführt zu sein, der Telekommunikationsdienste an mehrere Anwender über Telekommunikationsendgeräte (3, 4, 5), die mit verschiedenen Telekommunikationsnetzen (1) verbunden sind, liefert,
**dadurch gekennzeichnet, dass** es Befehle enthält, um die Schritte des Verfahrens nach einem der Ansprüche 1 bis 6 auszuführen, die von einem Telekommunikationsdienst ausgeführt werden.

15. Datenverarbeitungssystem, das mehrere Telekommunikationsendgeräte (3, 4, 5) von Anwendern, die mit verschiedenen Telekommunikationsnetzen (1) verbunden sind, mehrere Server (2), die Telekommunikationsdienste auf Rechnung der Anwender liefern, und einen Dienstvermittlungsserver (10), der entworfen ist, um die von den Telekommunikationsdiensten (2) ausgeführten Verarbeitungen zu koordinieren, enthält,
**dadurch gekennzeichnet, dass** der Dienstvermittlungsserver (10) einem der Ansprüche 7 bis 11 entspricht.
